## Europäisches Patentamt

## European Patent Office

## Office européen des brevets

(19)

(11) Veröffentlichungsnummer: **0 242 741
B1**

(12)

# EUROPÄISCHE PATENTSCHRIFT

(45) Veröffentlichungstag der Patentschrift:
25.07.90

(21) Anmeldenummer: 87105356.7

(22) Anmeldetag: 10.04.87

(51) Int. Cl.⁵: **F16J 15/32**

(54) Dichtungsanordnung.

(30) Priorität: 24.04.86  DE 3613880

(43) Veröffentlichungstag der Anmeldung:
28.10.87 Patentblatt 87/44

(45) Bekanntmachung des Hinweises auf die Patenterteilung:
25.07.90 Patentblatt 90/30

(84) Benannte Vertragsstaaten:
CH FR GB IT LI

(56) Entgegenhaltungen:
EP-A- 0 093 889
DE-A- 2 222 416
DE-U- 8 325 499
FR-A- 2 114 938
US-A- 3 268 235
US-A- 4 496 161
US-A- 4 566 703

(73) Patentinhaber: Busak + Luyken GmbH & Co.,
Handwerkstrasse 5-7, D-7000 Stuttgart 80(DE)

(72) Erfinder: Mack, Theo, Im Grossen Garten 5,
D-7022 Leinfelden-Echterdingen(DE)
Erfinder: Edlund, Roy, Mittlerer Bauernwaldweg 22,
D-7000 Stuttgart 1(DE)

(74) Vertreter: Patentanwälte Kohler - Schwindling - Späth,
Hohentwielstrasse 41, D-7000 Stuttgart 1(DE)

ACTORUM AG

## Beschreibung

Die Erfindung betrifft eine Dichtungsanordnung mit einem in die Nut eines von zwei gegeneinander beweglichen Maschinenteilen eingelegten Dichtring aus zähelastischem Kunststoff und einem zwischen Dichtring und Nutengrund angeordneten, den Dichtring radial belastenden Spannring aus gummielastischem Material, dessen axiale Ausdehnung erheblich geringer ist als diejenige des Dichtringes und dessen axiale Lage in Bezug auf den Dichtring durch Anschläge derart fixiert ist, daß der Dichtring im Bereich einer Kante belastet ist.

Dichtungsanordnungen dieser Art sind in unterschidlichen Auführungsformen bekannt. So offenbart die DE-A 2057 027 eine hydraulische Dichtung mit einem zylindrischen Dichtring und einem gummielastischen Spannring, der mit seinem Zentrum über einem Ende des zylindrischen Dichtringes angeordnet ist und daher dieses Ende einseitig belastet. Der über den Dichtring überstehende Abschnitt des Spannringes stützt sich an einem vorzugweise starren Stützring ab, der keine Dichtungsaufgaben zu erfüllen hat. Eine einwandfreie Funktion dieser Dichtung verlangt das Einhalten sehr enger Toleranzen bezüglich der Durchmesser der Dicht- und Stützringe im Verhältnis zueinander sowie auch im Verhältnis zum Durchmesser der Dichtfläche, also beispielsweise dem Durchmesser einer abzudichtenden Stange oder Welle.

Aus der US-A 3 033 578 ist eine Dichtungsanordnung bekannt, bei welcher ein im wesentlichen zylindrischer Dichtring an seinen Enden durch jeweils einen O-Ring belastet ist. Die beiden dem Dichtring zugeordneten O-Ringe sind durch einen Steg des die Dichtungsanordnung aufnehmenden Bauteiles voneinander getrennt. Die beiden Spannringe befinden sich dabei zentrisch zu an der Dichtfläche anliegenden ringförmigen Abschnitten des Dichtringes, die durch Nuten voneinander getrennt sind. Auch eine solche Dichtung erfordert das Einhalten enger Toleranzen, damit sie während einer angemessenen Zeitdauer eine brauchbare Abdichtung gewährleistet.

Aus DE-U 8 325 499 ist eine Ringdichtung zum Abdichten von beweglichen Körpern bekanntgeworden, die einen Dichtring aufweist, der mit drei Stegen an einer abzudichtenden Gleitfläche anliegt. Der Dichtring ist in einer Nut angeordnet und wird über einen Spannring an die Gleitfläche gepresst. Die Stege sind am Dichtring derart angeordnet, daß ein mittlerer Steg als Abdichtung dient und die beiden äußeren Stege als Führungsstege ein Kippen der Dichtung verhindern. Die Dichtung ist für hohe Drücke geeignet. Mit zunehmendem Druck wird der mittlere Steg verstärkt an die Gleitfläche gepresst.

Weiterhin ist aus DE-A 2 222 416 ein hydropneumatischer Speicher bekannt, der in der Nut eines Maschinenteils eine Dichtungsanordnung aufweist, die über einen Dichtring den Spalt gegenüber einem angrenzenden Maschinenteil abdichtet. Der Dichtring ist im Querschnitt bikonkav und ein als O-Ring ausgebildeter Spannring liegt an dem Dichtring an. Der Spannring ist seitlich in der Nut nicht fixiert und kann sich verlagern.

Demgegenüber liegt der Erfindung die Aufgabe zugrunde, eine Dichtungsanordnung der eingangs genannten Art so auszubilden, daß sie mit größeren Toleranzen hergestellt werden kann als bisher und trotzdem eine gute Abdichtung gewährleistet.

Diese Aufgabe wird nach der Erfindung dadurch gelöst, daß der Dichtring an seiner am anderen Maschinenteil anliegenden Dichtfläche eine ringförmige Aussparung aufweist und der Spannring etwa mittig zur Aussparung angeordnet ist.

Im Gegensatz zu den bekannten Dichtungen wirkt demnach bei der erfindungsgemäßen Dichtungsanordnung der Spannring in einem Bereich auf den Dichtring, der zwischen den Stellen liegt, mit denen sich der Dichtring an der Dichtfläche abstützt. In Abhängigkeit von den Fertigungstoleranzen kann sich daher der Dichtring mehr oder weniger stark durchbiegen, ohne daß dadurch der Anpreßdruck wesentlich beeinflußt wird, mit dem der Dichtring im Bereich der Kanten an der Dichtfläche anliegt, welche die beidseitig der Aussparung liegenden Abschnitte des Dichtringes begrenzen. Es wird daher durch die erfindungsgemäße Dichtungsanordnung ein unter Betriebsbedingungen im wesentlichen konstanter Anpreßdruck erreicht, der auch dann erhalten bleibt, wenn im Betrieb der Dichtungsanordnung Dimensionsänderungen infolge von Temperaturschwankungen auftreten.

Es versteht sich, daß bei der erfindungsgemäßen Dichtung die erzielbaren Anpreßkräfte durchaus von der Biegesteifigkeit des zähelastischen Kunststoffes abhängen, aus denen der Dichtring besteht. Daher ist diese Dichtung nur bei moderaten Drücken bis zu etwa 150 bar mit Vorteil brauchbar. Bis in den Bereich moderater Drücke hinein handelt es sich jedoch um eine reibungsarme, toleranz- und temperaturunempfindliche Dichtung für den Pneumatik- und den Hydraulikbereich, die sich durch eine gute Dichtwirkung bei langer Lebensdauer auszeichnet.

Bei einer bevorzugten Ausführungsform der Erfindung sind die an die Nut angrenzenden Flächenabschnitte kegelförmig ausgebildet, so daß der Dichtring im entspannten Zustand mit den an seinen äußeren Stirnflächen liegenden Kanten an der Dichtfläche anliegt. Bei Zunahme der Druckkräfte und damit der Durchbiegung des Dichtringes legen sich die kegelförmigen Flächenabschnitte in zunehmendem Maße an die Dichtfläche des anderen Maschinenteiles an, während gleichzeitig der Druck an den äußersten Kanten erhöht wird. Sowohl die Druckerhöhung an den äußeren Kanten als auch die Zunahme der Flächenpressung in dem bis zur inneren Aussparung reichenden Bereich bewirkt bei zunehmendem Druck eine Verbesserung der Abdichtung.

Um zu verhindern, daß bei weiterer Druckzunahme der Dichtring mit den an die Aussparung angrenzenden Kanten der Dichtfläche am anderen Maschinenteil anliegt und nach außen hin abhebt, kann der Dichtring an seinen Enden über die von dem Spannring belastete Fläche überstehende Stege aufweisen, mit denen der Dichtring am Nutengrund anliegt, so daß diese Stege ein Ausweichen des Dichtringes verhindern und Widerlager bilden, die zu einer Erhöhung der Anpreßkräfte beitragen. Damit wird die Druckbelastbarkeit der erfindungsgemäßen Dichtungsanordnung weiterhin erhöht.

Die axiale Fixierung des Spannringes gegenüber dem Dichtring kann auf unterschiedliche Weise erfolgen. Beispielsweise wäre es möglich, zu beiden Seiten des Spannringes in die Spannring und den Dichtring aufnehmende Nut Stützringe einzulegen. Es wäre auch denkbar, den Dichtring auch an seiner dem Spannring zugewandten Seite mit einer Aussparung zu versehen, die zur Aufnahme des Spannringes dient. Hierdurch könnten jedoch von dem Spannring auf den Dichtring dessen Funktionen in ungünstiger Weise beeinflussende Axialkräfte ausgeübt werden. Daher sieht eine bevorzugte Ausführungsform der Erfindung vor, daß die die Dicht- und Spannringe aufnehmende Nut im Bereich ihrer Mitte eine Vertiefung aufweist, in die der Spannring eingreift. Auf diese Weise ist gewährleistet, daß die Lage des Spannringes einwandfrei bestimmt ist und auf den Dichtring nur radial wirkende Spannkräfte übertragen werden, wie sie für eine optimale Funktion der Dichtungsanordnung benötigt werden.

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen:

Fig. 1 einen Querschnitt durch den Dichtring einer Dichtungsanordnung nach der Erfindung in entspanntem Zustand und

Fig. 2 eine Dichtungsanordnung nach der Erfindung unter Verwendung des Dichtringes nach Fig. 1.

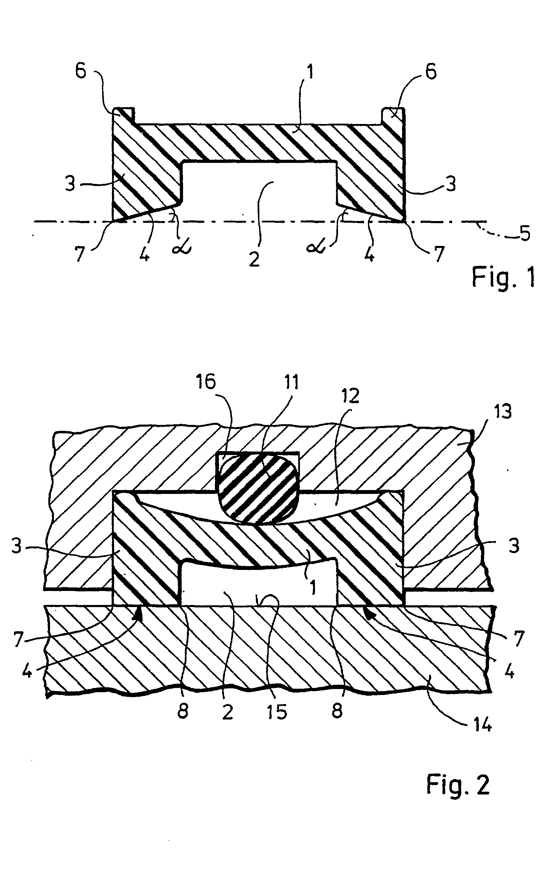

Fig. 1 zeigt den Querschnitt eines Dichtringes in entspanntem Zustand. Dieser Dichtring 1 besteht aus einem zähelastischen Kunststoff, beispielsweise auf der Basis von PTFE oder Polyurethan. Sein zylindrischer Grundkörper ist an einer Seite mit einer mittleren Aussparung 2 versehen. Die die Aussparung 2 begrenzenden Schenkel 3 haben schräge Stirnflächen 4, die mit einer die Enden der Schenkel 3 berührenden, konzentrischen Zylinderfläche 5 sich nach innen in Richtung auf die Aussparung 2 öffnende Winkel α bilden. An der anderen Seite weist der Dichtring an seinen Enden zwei Stege 6 auf.

Zur Bildung einer Dichtungsanordnung wird der in Fig. 1 dargestellte Dichtring 1 zusammen mit einem gummielastischen Spannring 11 in die Nut 12 des einen von zwei gegeneinander abzudichtenden Bauteilen 13, 14 eingebaut und liegt mit den Stirnflächen 4 an den Enden seiner Stege 3 an der Dichtfläche 15 des anderen Bauteiles 14 an. Die Dimensionen der Nut 12 sind so bemessen, daß der Dichtring 1 mit geringem axialem Spiel in dieser Nut aufgenommn wird und mit seinen Stegen 6 am Grund der Nut 12 anliegt. Der gummielastische Spannring 11 greift in eine Vertiefung 16 ein, die im Bereich der Mitte der Nut 12 angebracht ist. Bei dem gummielastischen Spannring 11 handelt es sich um einen einfachen O-Ring. Der Durchmesser des Spannringes 11 ist kleiner als die axiale Länge der Aussparung 2 im Dichtring 1, so daß der Spannring nicht gegen ein starres Widerlager wirkt, sondern auf einen Bereich des Dichtrings, in dem keine Abstützung für den Dichtring vorhanden ist. Infolgedessen erleidet der Dichtring 1 eine Durchbiegung, wie sie in Fig. 2 angedeutet ist. Diese Durchbiegung kann so stark sein, daß die Schrägflächen 4 an den Enden der Schenkel 3 an der Dichtfläche 15 des anderen Bauteiles 14 zur Anlage kommen, wie es ebenfalls in Fig. 2 angedeutet ist.

Die Anpreßkraft, mit der die Schenkel 3 mit ihren Stirnflächen 4 an der Dichtfläche 15 anliegen, wird im wesentlichen von der Spannkraft des Spannringes 11 bestimmt, die von geringen Durchmesser-Unterschieden weitgehend unabhängig ist. Diese Anpreßkraft ist daher von Toleranzen im Durchmesser des anderen Maschineneiles 14 sowie auch vom Innendurchmesser der Vertiefung 16 und dem Außendurchmesser des Dichtringes weitgehend unabhängig. Andererseits kann sich auch der Dichtring selbst an unterschiedliche Durchmesser des anderen Maschinenteiles 14 leicht anpassen, da seine am Maschinenteil 14 anliegenden Abschnitte radial nachgiebig sind. Daher ist die erfindungsgemäße Dichtungsanordnung gegenüber Herstellungstoleranzen relativ unempfindlich. Sie wird in ihrer Funktion auch nicht durch Abmessungsänderungen beeinträchtigt, welche auf Temperaturschwankungen zurückzuführen sind, so daß die erfindungsgemäße Dichtung insbesondere auch für solche Anwendungszwecke hervorragend geeignet, bei denen sehr starke Temperaturwechsel vorkommen.

Bei der Verformung des Dichtringes 1 findet, ausgehend von der in Fig. 1 dargestellten entspannten Lage, auf den Querschnitt des Ringes bezogen, zunächst ein Kippen um die äußeren Kanten 7 des Dichtringes statt, bis die Stirnflächen 4 flach an der Dichtfläche 15 anliegen, wie es Fig. 2 zeigt. Bei einem weiteren Durchbiegen des mittleren Abschnittes 1 bestünde die Tendenz, daß ein Kippen um die inneren Kanten 8 stattfindet, mit dem Ergebnis, daß der Dichtring im Bereich der äußeren Kanten 7 von der Dichtfläche 15 abhebt, was nachteilig wäre. Um ein solches Abheben zu verhindern, sind bei dem dargestellten Ausführungsbeispiel die Stege 6 an den Enden des Dichtringes 1, 3 angebracht, die sich am Grunde der Nut 12 abstützen und daher unerwünschte Verformungen des Dichtringes 1, 3 verhindern.

Es versteht sich, daß die Erfindung nicht auf das dargestellte Ausführungsbeispiel beschränkt ist, sondern Abweichungen davon möglich sind, ohne den Rahmen der Erfindung zu verlassen. Der Winkel α zwischen der Dichtfläche und der Dichtungsoberfläche kann etwa im Bereich von 0° bis 15° variieren. Die zur Aufnahme des Spannringes dienende Vertiefung könnte auch dadurch gebildet sein, daß eine tiefere Nut zu beiden Seiten des Spannringes mit Stützringen ausgefüllt wird. Weiterhin versteht es sich, daß eine Dichtungsanordnung nach der Erfindung sowohl am Umfang eines Kolbens als auch in dem zur Lagerung und Führung einer Stange dienenden Bauteil angeordnet sein kann. Die erfindungsgemäße Dichtung ist auch als Wellendichtung hervorragend geeignet. Endlich kann sie zur Abdichtung gegen beliebige Medien benutzt werden. Sie ist insbesondere als Dichtung sowohl für pneumatische als auch für hydraulische Systeme geeignet.

**Patentansprüche**

1. Dichtungsanordnung mit einem in die Nut (12) eines von zwei gegeneinander beweglichen Maschinenteilen (13, 14) eingelegten Dichtring (1, 3) aus zähelastischem Kunststoff und einem zwischen Dichtring (1, 3) und Nutengrund angeordneten, den Dichtring (1, 3) radial belastenden Spannring (11) aus gummieelastischem Material, dessen axiale Ausdehnung erheblich geringer ist als diejenige des Dichtringes (1, 3) und dessen axiale Lage in Bezug auf den Dichtring (1, 3) durch Anschläge derart fixiert ist, daß der Dichtring (1, 3) im Bereich einer Kante (7) belastet ist, dadurch gekennzeichnet, daß der Dichtring (1) an seiner am anderen Maschinenteil (14) anliegenden Dichtfläche (15) eine ringförmige Aussparung (2) aufweist und der Spannring (11) etwa mittig zur Aussparung angeordnet ist, wobei die an der Aussparung (2) angrenzenden Flächenabschnitte (4) kegelförmig ausgebildet sind, so daß der Dichtring (1, 3) im entspannten Zustand mit den an seinen äußeren Stirnflächen liegenden Kanten (7) an der Dichtfläche (5) anliegt.

2. Dichtungsanordnung nach Anspruch 1 oder 2, dadurch gekennzeichnet, daß der Dichtring (1) an seinen Enden über die von dem Spannring (1) belastete Fläche überstehende Stege (6) aufweist, mit denen der Dichtring (1) am Nutengrund anliegt.

3. Dichtungsanordnung nach einem der vorhergehenden Ansprüche, dadurch gekennzeichnet, daß die die Dicht- und Spannringe (1, 11) aufnehmende Nut (12) im Bereich ihrer Mitte eine Vertiefung (16) aufweist, in die der Spannring (1) eingreift.

**Claims**

1. Seal arrangement having a sealing ring (1, 3) of tough resilient plastic, placed in the groove (12) of one of two machine parts (13, 14) moveable relative to one another, and a clamping ring (11) of rubber-elastic material, which is arranged between sealing ring (1, 3) and groove base, which stresses the sealing ring (1, 3) radially, the axial extension of which is considerably less than that of the sealing ring (1, 3) and the axial position of which in relation to the sealing ring (1, 3) is fixed by stops in such a way that the sealing ring (1, 3) is stressed in the region of one edge (7), characterized in that, at its sealing surface (15) resting against the other machine part (14), the sealing ring (1) has an annular recess (2) and the clamping ring (11) is arranged approximately centrally to the recess, the surface portions (4) adjoining the recess (2) being of tapered design, with the result that, in the relaxed condition, the sealing ring (1, 3) rests by the edges (7) situated at its outer front faces against the sealing surface (5).

2. Seal arrangement according to Claim 1 or 2, characterized in that, at its ends, the sealing ring (1) has webs (6) projecting above the surface stressed by the clamping ring (1), by which webs the sealing ring (1) rests against the groove base.

3. Seal arrangement according to one of the preceding claims, characterized in that, in the region of its centre, the groove (12) accomodating the sealing and clamping rings (1, 11) has a depression (16) in which the clamping ring (1) engages.

**Revendications**

1. Dispositif d'étanchéité comprenant une bague d'étanchéité (1, 3) en matière synthétique viscoélastique qui est insérée dans la rainure (12) de l'une de deux pièces de machine déplaçables l'une par rapport à l'autre, et un anneau de serrage (11) en matière élastique caoutchouteuse qui est agencée entre la bague d'étanchéité (1, 3) et un fond de rainure et sollicite radialement la bague d'étanchéité (1, 3) et dont l'extension axiale est beaucoup plus faible que celle de la bague d'étanchéité (1, 3) et dont la position axiale est fixée par rapport à la bague d'étanchéité (1, 3) par des butées de façon que la bague d'étanchéité (1, 3) soit sollicitée dans la zone d'un bord (7), caractérisé en ce que la bague d'étanchéité (1) présente un évidement annulaire (2) sur sa face d'étanchéité (5) adjacente à l'autre pièce de machine (14) et en ce que l'anneau de serrage (11) est agencé approximativement centralement par rapport à l'évidement, les sections de surface (4) contiguës à l'évidement (2) étant réalisées sous une forme conique de façon que la bague d'étanchéité (1, 3) soit, à l'état détendu, en appui sur la face d'étanchéité (5) par les bords (7) situés sur ses surfaces frontales extérieures.

2. Dispositif d'étanchéité suivant la revendication 1, caractérisé en ce que la bague d'étanchéité (1) présente à ses extrémités des ailes (6) qui débordent au-delà de la surface sollicitée par l'anneau de serrage (11) et par lesquelles la bague d'étanchéité (1) est en appui sur le fond de rainure.

3. Dispositif d'étanchéité suivant l'une des revendications précédentes, caractérisé en ce que la rainure (12), dans laquelle sont logés la bague d'étanchéité (1) et l'anneau de serrage (11), présente dans la zone de son milieu un renfoncement (16) dans lequel pénètre l'anneau de serrage (1).

Fig. 1

Fig. 2